# FASCICULE DE BREVET EUROPEEN

(11) **EP 1 654 926 B1**
(45) Date de publication et mention de la délivrance du brevet: **24.06.2015**
(21) Numéro de dépôt: 04370039.2
(22) Date de dépôt: 28.12.2004
(51) Int. Cl.: A01G 31/00

(54) **Procédé de culture et de préparation pour obtenir un émincé de légumes**
Pflanzverfahren und Herstellungsverfahren zum Erhalt von Gemüsegeschnetzeltem
Process of planting and preparation to obtain vegetables cut into stripes

(30) Priorité: 03.11.2004 FR 0411720
(43) Date de publication de la demande: 10.05.2006
(73) Titulaire: Leclere, Pascal, 80360 Sailly-Saillisel (FR)
(72) Inventeur: Leclere, Pascal, 80360 Sailly-Saillisel (FR)
(74) Mandataire: Boubal, Denis Henri Jacques

(56) Documents cités:
- EP-A- 0 963 693
- EP-A- 1 010 368
- EP-A- 1 197 307

## Description

La présente invention concerne un procédé de culture et de préparation pour obtenir un émincé de légumes, dont la hampe et/ou les feuilles présentent une forte sensibilité à l'oxydation, tels que notamment les endives.

Il est connu que, lors du traitement et de la préparation d'endives, celles-ci subissent un rougissement. Ce rougissement est du à une oxydation, catalysée par des enzymes appelées polyphénoloxydase, des composés phénoliques endogènes par l'oxygène moléculaire où les premiers produits de réaction sont les quinones. Les quinones se condensent ensuite rapidement pour former des polymères de haute masse moléculaire.

Cette oxydation n'a lieu cependant qu'après une décompartimentation cellulaire, qui arrive lors du traitement et de la préparation des produits, notamment lors de la coupe des endives, permettant alors la mise en contact du substrat phénolique, présent dans les vacuoles des cellules, et du système enzymatique, normalement lié aux membranes plastidiales.

Actuellement, afin d'éviter les problèmes liés à l'oxydation, les légumes et, notamment les endives, sont traités avec des solutions acides contenant des agents antioxydation, tels que le chlore, le dioxyde de soufre ou l'ascorbate de sodium comme décrit dans le document EP-0963693.

Bien que très répandue, un tel traitement présente de nombreux inconvénients, notamment liés aux problèmes toxicologiques posés par l'emploi de certains produits chimiques, à la modification des qualités gustatives qu'elle entraîne et au prix de certains produits antioxydation.

Le but de la présente invention est de proposer un procédé de culture et de préparation pour obtenir un émincé de légumes dont la hampe et/ou les feuilles présentent une forte sensibilité à l'oxydation, tels que notamment les endives, ainsi qu'un dispositif de coupe pour la mise en oeuvre dudit procédé, qui pallient les inconvénients précités, notamment au niveau de l'oxydation.

Un autre but de la présente invention est de proposer un procédé de culture et de préparation pour obtenir un émincé d'endives qui permettent d'obtenir des endives avec toutes les qualités visuelles, gustatives et avec beaucoup moins d'amertume.

Un autre but de la présente invention est de proposer un procédé de culture et de préparation pour obtenir un émincé d'endives, qui permettent d'obtenir des endives amincies, sans détérioration, intégralement lavées, et gardant toute leur fraîcheur.

D'autres buts et avantages de la présente invention apparaîtront au cours de la description qui va suivre, qui n'est donnée qu'à titre indicatif et qui n'a pas pour but de la limiter.

L'invention concerne tout d'abord un procédé de culture et de préparation pour obtenir un émincé de légumes, dont la hampe et les feuilles présentent une forte sensibilité à l'oxydation, tels que notamment les endives, caractérisé en ce qu'il comprend au moins les étapes successives suivantes :
- on réalise cette culture hydroponique des légumes en alimentant leur racine avec une solution nutritive de nature acide,
- on baisse la température environnante des légumes la veille de la séparation de la racine et de la hampe florale afin de bloquer les fonctions cellulaires de cette dernière,
- on coupe la hampe et les feuilles des légumes en émincé,
- on nettoie les légumes émincés dans un bain d'eau,
- on égoutte et on sèche ou essore par centrifugation les légumes émincés.

Il est d'ailleurs à noter qu'avec un tel procédé, on obtient un produit 100 % naturel.

Le nettoyage des légumes émincés peut également être réalisé dans un bain d'eau osmosée. L'eau osmosée peut améliorer l'efficacité du nettoyage en facilitant la dissolution des enzymes et des composés phénoliques.

L'invention sera mieux comprise à la lecture de la description suivante, accompagnée des dessins en annexe parmi lesquels :
- la figure 1 illustre schématiquement les différentes phases d'un mode de réalisation de procédé selon l'invention,
- la figure 2 illustre, schématiquement en coupe, un dispositif de coupe des légumes selon la présente invention,
- la figure 3 illustre schématiquement un disque de coupe rotatif représenté en plusieurs positions selon la présente invention et selon le moment de la coupe.

L'invention concerne tout d'abord un procédé de culture et de préparation pour obtenir un émincé de légumes, dont la hampe ou les feuilles présentent une forte sensibilité à l'oxydation, tels que notamment les endives. Le procédé comprend au moins les étapes successives suivantes :
- on réalise cette culture hydroponique des légumes en alimentant leur racine avec une solution nutritive de nature acide,
- on baisse la température environnante des légumes la veille de la séparation de la racine et de la hampe florale afin de bloquer les fonctions cellulaires de cette dernière,
- on coupe la hampe et les feuilles des légumes en émincé,
- on nettoie les légumes émincés dans un bain d'eau,
- on égoutte et on sèche ou on essore par centrifugation les légumes émincés.

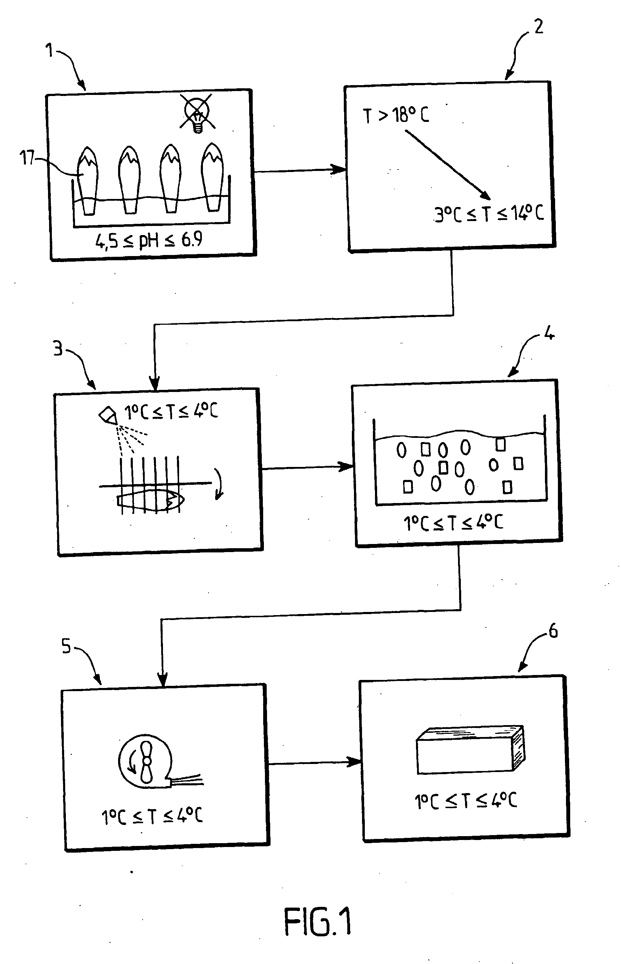

Comme illustré à la figure 1, le procédé de traitement et de préparation pour obtenir un émincé de légumes commence à partir d'une première étape, repérée 1 à la figure 1, appelée forçage.

Par forçage, on entend toute opération qui consiste à mettre une plante dans des conditions artificielles de milieu, de température et éventuellement d'éclairement, ou d'obscurité afin d'obtenir une production à contre-saison.

Un objectif du procédé, selon la présente invention, est de minimiser la destruction cellulaire et ainsi éviter le contact entre les enzymes phénoloxydases et les composés phénoliques afin d'éviter les réactions d'oxydation et les subséquents rougissements des légumes.

Le procédé, selon la présente invention, commence à partir du forçage. La racine lors de sa période de plus ou moins 21 jours de forçage est alimentée en hydroponie avec des éléments minéraux ayant un pH le plus bas possible.

Par hydroponie, on entend toute culture de végétaux sur support artificiel avec alimentation par des solutions nutritives.

La veille de la séparation de la racine et de la hampe florale, appelée cassage, les bacs d'endives doivent être mis au froid, en eau et en air, tels qu'illustrés schématiquement à l'étape 2, figure 1. Le but est de bloquer progressivement les fonctions cellulaires de la plante, telles que les échanges intra et extracellulaires, dont notamment la photosynthèse. En effet, l'abaissement de la température conduit à une phase dite de « latence ou de zéro de végétation cellulaire ».

Le jour du cassage, le produit doit être travaillé le plus vite possible afin de limiter le dessèchement et le réchauffement de l'endive entraînant ainsi une réactivation cellulaire et le rougissement des coups superficiels.

Une fois les endives coupées au moyen d'un dispositif de coupage tel que décrit par la suite, et tel qu'illustré à l'étape 3 de la figure 1, on soumet les légumes coupés à une extraction au moyen d'un jet d'eau osmosée à basse pression pour ne pas abîmer les cellules. Les endives tombent ensuite dans un bac de pré-nettoyage, étape 4,figure 1, enlevant toutes les grosses particules indésirables, telles que de la terre, bouts de feuilles noires, etc, et dans le même temps les enzymes responsables du rougissement.

Un deuxième bain d'eau osmosée sera plus spécifique au nettoyage final des cellules coupées, enlevant les enzymes, et de nettoyage intégral de toute la surface de l'endive.

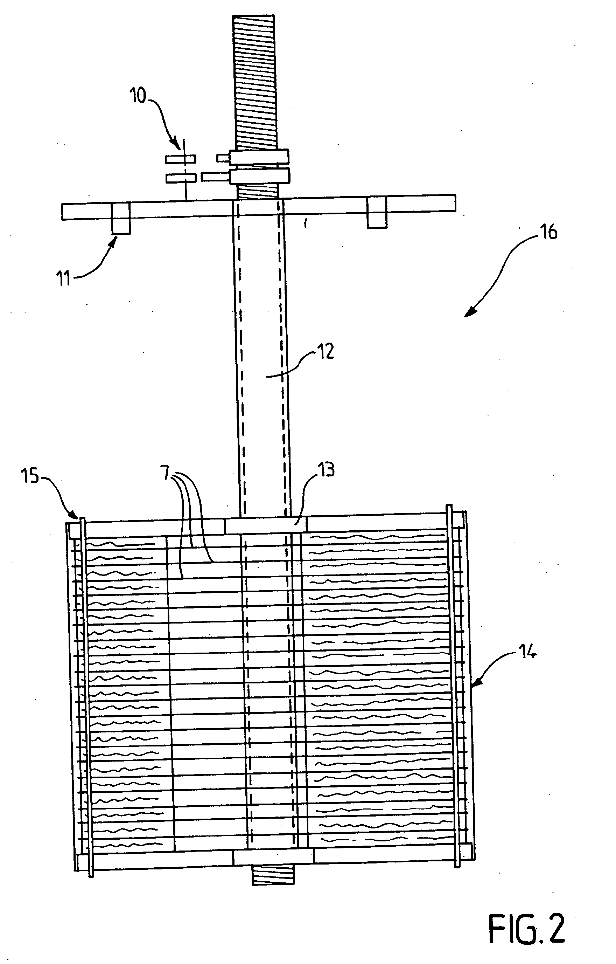

L'émincé d'endives est ensuite ressorti du bain puis posé sur une table vibrante non illustrée, en forme d'entonnoir, et sur laquelle seront séparées les parties indésirables comme l'axe ou bouts de feuilles déclassées à la suite d'un coup ou d'un noircissement. Les vibrations vont faire tomber les émincés d'endives sur un tapis à mailles afin de se faire égoutter et sécher délicatement par un système de ventilation monté sur variateur, et tel qu'illustré schématiquement à l'étape 5, figure 2. Le séchage peut être effectué par essorage centrifuge.

Lors du conditionnement du produit en barquettes, étape 6, figure 1, un très léger vide d'air sans réinjection de gaz, peut être effectué avant la mise de l'opercule qui permettra de garder un produit naturellement conservé sur une date limite d'utilisation optimale (D.L.U.O.) minimum de sept jours.

Selon un mode particulier de la présente invention, les légumes sont alimentés en salle noire et avec une solution nutritive présentant un pH entre 4,5 et 6,9.

Tel que déjà mentionné précédemment, les racines des légumes doivent être alimentées avec des solutions présentant un pH le plus bas possible, et notamment entre 4,5 et 6,9. Lors du développement du chicon, la racine pourra alors se charger en pH acide qui limitera la résistance cellulaire des liaisons H contribuant à la déformation cellulaire lors de la future coupe, ce qui permettra d'éviter la déchirure et l'éclatement des cellules à proximité et qui, dans la suite du processus permet de limiter le contact entre les enzymes et les substrats phénoliques, et, par conséquent, le rougissement des endives.

Selon un autre mode particulier de la présente invention, les légumes doivent être mis au froid, en eau et en air, tel qu'illustré schématiquement à l'étape 2, figure 1, à une température comprise entre 3 °C et 14 °C. Un écart de température aussi important s'explique par la différence entre le bord et le milieu du bac, qui contient les légumes, au coeur de l'endive et selon le seuil de tolérance de descente rapide au froid suivant la variété ou la saison. Dans le principe, il faut descendre la température le plus bas possible en gradient positif, sans apporter de problèmes de borduration ou ouverture. Tel que mentionné précédemment, en baissant la température, on bloque progressivement les fonctions cellulaires de la plante et, notamment, la photosynthèse.

Selon un mode particulier de l'invention, les légumes sont coupés à une faible vitesse de rotation afin d'éviter les brûlures cellulaires.

On a obtenu de bons résultats avec une vitesse de rotation permettant de couper 1 cm de légume par 5 secondes.

Selon la présente invention, le couteau utilisé pour la coupe des légumes est mouillé en continu, sur chaque face, avec de l'eau osmosée à une température comprise entre 1 et 4 °C, afin d'éviter le dépôt d'enzymes responsables de l'oxydation.

Par eau osmosée, on entend toute eau purifiée sans l'ajout de produits chimiques. Le procédé consiste à presser l'eau à travers une membrane semi-perméable qui ne laisse passer que les molécules d'eau tout en retenant les autres éléments indésirables, tels que les nitrates.

Selon une variante de la présente invention, on bloque les fonctions cellulaires de la hampe florale des légumes, en outre, avec au moins un trempage dans un bain d'eau osmosée à une température comprise entre 1 et 4 °C. Le temps de trempage de l'émincé sera en fonction de la quantité de produit immergé et de son état de propreté.

Comme montrés à la figure 1, étape 4, les bains de nettoyage en eau osmosée sont à une température comprise entre 1 et 4 °C et un pH compris entre 4,5 et 6,9 dans une eau en mouvement continu par pression pour un brassage horizontal, créé par une pompe électrique. Un réseau de canalisation percé de petits trous servira à la circulation et à l'évacuation du flux d'air pneumatique pour un brassage vertical. Ce système va permettre de séparer, par densité, le produit fraîchement coupé, en partie axe et partie feuille et la dilution des composés phénoliques provenant des cellules coupées afin de les rendre inactifs.

La régénération de l'eau par une perte naturelle en continu sera variable en fonction de l'efficacité du blocage cellulaire qui aura été effectué dans les étapes précédentes, et qui jouera directement sur les taux de concentration d'enzymes. Cette perte permettra de supprimer également tous les problèmes de développement bactérien d'une eau sale.

On a obtenu de bons résultats avec un pourcentage de renouvellement d'eau entre 20 à 70 % pour 100 kg d'endives émincées.

Selon un autre mode particulier de l'invention, on égoutte et on sèche les légumes coupés sous un flux d'air et à une température comprise entre 1 et 4 °C, tel qu'illustré à l'étape 5, figure 1.

Comme illustré à la figure 1, étape 5, les légumes coupés peuvent être séchés au moyen d'un système de ventilation monté sur variateur, ventilant par le dessus de l'air entre 1 et 4 °C, qui sera contrôlé en continu afin de régler soit la ventilation, soit l'avancement du tapis monté sur variateur (non illustré). Ce système permet de supprimer tout choc du produit par pression et écrasement des cellules qui pourrait entraîner par la suite un rougissement.

La ventilation se fera sur deux faces à la suite d'un retournement par transfert d'un tapis sur un autre d'une très faible hauteur.

Selon la présente invention, les légumes sont conditionnés à une température comprise entre 1 et 4 °C, sous ambiance hydrométrique contrôlée et dans un emballage légèrement poreux, étape 6, figure 1.

Le conditionnement des légumes sous une ambiance hydrométrique contrôlée limite le dessèchement tissulaire et permet de garder toute la fraîcheur et les saveurs organoleptiques.

Selon un mode particulier de réalisation, le conditionnement des légumes peut être effectué sous atmosphère modifié par adjonction d'un gaz inerte, tel que l'azote.

Pour une meilleure compréhension de l'invention il est fait référence à un dispositif de coupe, qui ne fait pas partie de l'invention, notamment conçu pour la mise en oeuvre du procédé décrit précédemment, présentant des moyens pour contenir les légumes et des moyens pour les couper en tranches afin d'obtenir un émincé de légumes.

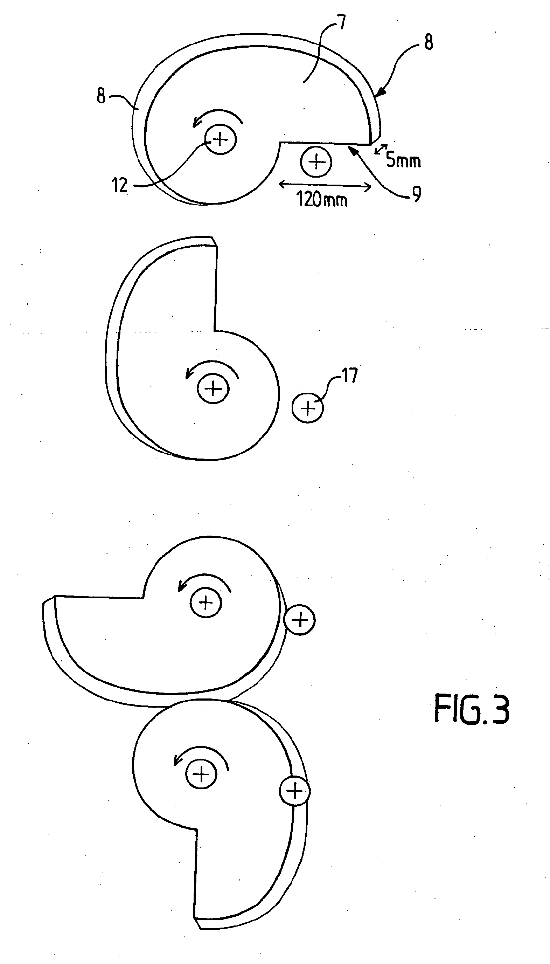

Le dispositif est constitué en outre d'au moins un disque 7 de coupe rotatif, présentant un bord de coupe de rayon progressif angulairement en forme de spirale, comme illustré à la figure 3.

La coupe de l'endive 17 a une grande importance dans l'aspect esthétique et dans sa conservation. Il est impératif d'obtenir une coupe, la plus fine possible, et ceci grâce à un couteau 8 de conception spécifique. Tel qu'illustré à la figure 3, le couteau présente en outre un biseau 2 de 10 mm sur une seule face, qui donnera l'équivalence de la précision d'un tranchant d'une lame de rasoir et ne coupera que les cellules se trouvant dans le prolongement virtuel de la future coupe.

Le couteau peut présenter un biseau sur les deux faces.

Pour ne pas forcer le disque 7 à une déformation incontrôlée, il faut que l'endive 17 soit calée correctement dans l'accessoire de coupe correspondant à son diamètre.

On a obtenu de bons résultats avec une épaisseur de disque dit miroité 7 compris entre 0,5 et 0,8 mm, de façon à ne pas détruire par éclatement, suite à la pression, des cellules se trouvant juste derrière celles coupées à cause de l'épaisseur cumulée des lames, une longueur de 264 mm, une largeur de 188 mm et une partie coupante 9 de 120 mm.

Le disque 7 dudit couteau 8 permet de couper un centimètre pour un développement d'environ 4,5 à 5 cm.

Ledit dispositif est constitué d'une pluralité de disques 7 disposés parallèles superposés sur un même arbre de rotation, et espacés régulièrement, notamment à l'aide d'entretoises.

Tel que montré à la figure 2, le dispositif de coupe comporte en outre, un support de cellules magnétiques 10 qui permet de contrôler la vitesse de rotation du couteau, une buse 11 pour un jet d'eau, un tube de force 12, un écrou 13 de blocage des disques 7, un carter 14 et une fixation accessoire 15 permettent de guider la périphérie des disques 7.

Naturellement, d'autres modes de mise en oeuvre, à la portée de l'homme de l'art, auraient pu être envisagés sans pour autant sortir du cadre de l'invention.

## Revendications

1. Procédé de culture et de préparation pour obtenir un émincé de légumes, dont la hampe et les feuilles présentent une forte sensibilité à l'oxydation, tels que notamment les endives, **caractérisé en ce qu'**il comprend au moins les étapes successives suivantes :
- on réalise cette culture hydroponique des légumes en alimentant leur racine avec une solution nutritive de nature acide,
- on baisse la température environnante des légumes la veille de la séparation de la racine et de la hampe florale afin de bloquer les fonctions cellulaires de cette dernière,
- on coupe la hampe et les feuilles des légumes en émincé,
- on nettoie les légumes émincés dans un bain d'eau,
- on égoutte et on sèche ou on essore par centrifugation les légumes émincés.

2. Procédé selon la revendication 1, **caractérisé en ce qu'**on alimente les légumes en salle noire et avec une solution nutritive présentant un pH entre 4,5 et 6,9.

3. Procédé selon la revendication 1, **caractérisé par le fait qu'**on descend la température environnante des légumes à une température comprise entre 3 et 14 °C.

4. Procédé selon la revendication 1, **caractérisé par le fait que** les légumes sont coupés à une faible vitesse afin d'éviter les brûlures cellulaires.

5. Procédé selon la revendication 1, **caractérisé par le fait que** le couteau utilisé pour la coupe des légumes est mouillé en continu avec de l'eau osmosée à une température comprise entre 1 et 4 °C.

6. Procédé selon la revendication 1, **caractérisé par le fait qu'**on bloque les fonctions cellulaires de la hampe florale des légumes, en outre, avec au moins un trempage dans un bain d'eau osmosée à une température comprise entre 1 et 4 °C.

7. Procédé selon la revendication 1, **caractérisé par le fait qu'**on égoutte et on sèche les légumes coupés sous un flux d'air et à une température comprise entre 1 et 4 °C.

8. Procédé selon la revendication 1, **caractérisé par le fait qu'**on conditionne les légumes émincés à une température comprise entre 1 et 4 °C, sous ambiance hydrométrique contrôlée et dans un emballage légèrement poreux.

## Patentansprüche

1. Kultur- und Herstellungsverfahren zum Erhalt von kleingeschnittenem Gemüse, bei dem der Stiel und die Blätter eine hohe Oxidationsempfindlichkeit aufweisen, wie insbesondere Chicoree, **dadurch gekennzeichnet, dass** es mindestens die nachstehenden aufeinanderfolgenden Schritte umfasst:
- Ausführen dieser Gemüsehydrokultur, indem die Wurzeln mit einer sauren Nährlösung versorgt werden,
- Absenken der Umgebungstemperatur des Gemüses am Tag vor der Trennung Wurzel von und Blattstielen, um die Zellfunktionen Letzterer zu blockieren,
- Kleinschneiden des Stiels und der Blätter des Gemüses,
- Reinigen des kleingeschnittenen Gemüses in einem Wasserbad,
- Abtropfen und Trocknen oder Schleudern durch Zentrifugation des kleingeschnittenen Gemüses.

2. Verfahren nach Anspruch 1, **dadurch gekennzeichnet, dass** das Gemüse in einer dunklen Halle und mit einer Nährlösung, die einen pH-Wert zwischen 4,5 und 6,9 aufweist, versorgt wird.

3. Verfahren nach Anspruch 1, **dadurch gekennzeichnet, dass** die Umgebungstemperatur des Gemüses auf eine Temperatur im Bereich zwischen 3 und 14 °C abgesenkt wird.

4. Verfahren nach Anspruch 1, **dadurch gekennzeichnet, dass** das Gemüse mit geringer Geschwindigkeit geschnitten wird, um Zellverbrennungen zu vermeiden.

5. Verfahren nach Anspruch 1, **dadurch gekennzeichnet, dass** das zum Schneiden des Gemüses verwendete Messer kontinuierlich mit Osmosewasser mit einer Temperatur im Bereich zwischen 1 und 4 °C befeuchtet wird.

6. Verfahren nach Anspruch 1, **dadurch gekennzeichnet, dass** die Zellfunktionen der Blattstiele des Gemüses außerdem mindestens durch Einweichen in einem Osmosewasserbad bei einer Temperatur im Bereich zwischen 1 und 4 °C blockiert werden.

7. Verfahren nach Anspruch 1, **dadurch gekennzeichnet, dass** das geschnittene Gemüse unter einem Luftstrom und bei einer Temperatur im Bereich zwischen 1 und 4 °C abgetropft und getrocknet wird.

8. Verfahren nach Anspruch 1, **dadurch gekennzeichnet, dass** das geschnittene Gemüse bei einer Temperatur im Bereich zwischen 1 und 4 °C unter hydrometrisch gesteuerter Umgebung und in eine leicht poröse Verpackung verpackt wird.

## Claims

1. Cultivation and preparation method for obtaining chopped vegetables, wherein the stalk and the leaves exhibit a high sensitivity to oxidation, such as chicory in particular, **characterised in that** it comprises at least the following successive steps:
- this hydroponic cultivation of the vegetables is carried out by feeding the root thereof with an acidic nutrient solution,
- the ambient temperature of the vegetables is lowered on the day prior to the separation of the root and the flower stalk so as to inhibit the cell functions thereof,
- the stalk and the leaves of the vegetables are chopped,
- the chopped vegetables are cleaned in a water-bath,
- the chopped vegetables are drained and dried or spin-dried by centrifugation.

2. Method according to claim 1, **characterised in that** the vegetables are fed in a dark room and with a nutrient solution having a pH between 4.5 and 6.9.

3. Method according to claim 1, **characterised in that** the ambient temperature of the vegetables is lowered to a temperature between 3 and 14°C.

4. Method according to claim 1, **characterised in that** the vegetables are chopped at a low speed in order to prevent cellular burns.

5. Method according to claim 1, **characterised in that** the knife used for chopping the vegetables is continuously moistened with reverse osmosis water at a temperature between 1 and 4°C.

6. Method according to claim 1, **characterised in that** the cell functions of the flower stalk of the vegetables are further inhibited with at least one steeping in a reverse osmosis water bath at a temperature between 1 and 4°C.

7. Method according to claim 1, **characterised in that** the chopped vegetables are drained and dried in an air flow and at a temperature between 1 and 4°C.

8. Method according to claim 1, **characterised in that** the chopped vegetables are packaged at a temperature between 1 and 4°C, in a hydrometrically controlled atmosphere and in a slightly porous packaging.
